# EUROPEAN PATENT APPLICATION

(11) **EP 4 443 537 A1**
(43) Date of publication of application: **09.10.2024**
(21) Application number: 23215239.7
(22) Date of filing: 08.12.2023
(51) Int. Cl.: H01M 4/131, H01M 4/1391, H01M 4/485, H01M 4/505, H01M 4/525, H01M 4/58, H01M 4/36, H01M 4/62

(54) **POSITIVE ELECTRODE MATERIAL, ELECTROCHEMICAL DEVICE, AND ELECTRONIC APPARATUS**

(30) Priority: 07.04.2023 CN 202310374051
(71) Applicant: AESC Japan Ltd., Yokohama-Shi, Kanagawa 220-0012 (JP)
(72) Inventor: WU, Guanhong, Pudong New Area Shanghai, 201315 (CN); WANG, Wenxu, Pudong New Area Shanghai, 201315 (CN); MO, Fangjie, Pudong New Area Shanghai, 201315 (CN); WANG, Yunhui, Pudong New Area Shanghai, 201315 (CN); LIU, Huyun, Pudong New Area Shanghai, 201315 (CN); YANG, Wenlong, Pudong New Area Shanghai, 201315 (CN); SUN, Huayu, Pudong New Area Shanghai, 201315 (CN)
(74) Representative: Becker, Eberhard

(57) **Abstract**

A positive electrode material, an electrochemical device, and an electronic apparatus are provided. The positive electrode material includes a first active material and a second active material; the first active material includes a lithium transition metal oxide; a general chemical formula of the second active material is Li_{1+(a/(2+a))}Mn_{2a/(2+a)}M_{6/(2+a)-2}O₂; wherein 0.5≤a≤1, M is selected from one or a plurality of Ni, Co, Mn, Mg, Al, Ti, Zr, Nb, La, Sr, and W, and the second active material produces a MnO₂ coating layer when having a lithium potential higher than X volt(V), wherein 4.3≤X≤4.6. The positive electrode material of the disclosure has higher high-temperature cycle stability when used in a battery.

## Description

### BACKGROUND OF THE INVENTION

### Field of the Invention

The disclosure relates to a positive electrode material, an electrochemical device, and an electronic apparatus.

### Description of Related Art

Demand for secondary batteries as energy sources is rapidly increasing as technology develops and demand for mobile devices increases. Among these secondary batteries, the lithium secondary battery having high energy density and voltage, long cycle life, and low self-discharge rate has been commercialized and widely used.

However, the positive electrode material used in the lithium-ion battery (such as lithium manganate (LiNi_{1.5}Mn_{0.5}O₄), ternary material (NCM/NCA), lithium manganese iron phosphate, lithium iron phosphate, and lithium cobalt oxide) all have the disadvantage of poor high-temperature cycle performance. For example, when used at 40 °C or more, the cycle performance thereof is dropped significantly, thus severely limiting the use of the lithium-ion battery.

### SUMMARY OF THE INVENTION

In order to overcome issues such as poor high-temperature cycle stability of the positive electrode material in the prior art, a positive electrode material, a positive electrode sheet, an electrochemical device, and an electronic apparatus are provided. The positive electrode material of the disclosure is used in the electrochemical device and may effectively improve the cycle performance of the electrochemical device at 45 °C.

In order to achieve the above objects, the technical solutions adopted by the disclosure are as follows:
**In the first aspect, the disclosure provides a positive electrode material:** including a first active material and a second active material;
   wherein the first active material includes a lithium transition metal oxide;
   wherein a general chemical formula of the second active material is Li_{1+(a/(2+a))}Mn_{2a/(2+a)}M_{6/(2+a)-2}O₂; wherein 0.5≤a≤1, M is selected from one or a plurality of Ni, Co, Mn, Mg, Al, Ti, Zr, Nb, La, Sr, and W; and the second active material produces a MnO₂ coating layer when having a lithium potential higher than X volt(V), wherein 4.3≤X≤4.6.
**In the second aspect, the disclosure also provides a positive electrode sheet,** including the positive electrode material.
**In the third aspect, the disclosure also provides an electrochemical device,** including the positive electrode sheet.
**In the fourth aspect, the disclosure also provides an electronic apparatus,** including the electrochemical device.

On the basis of conforming to common knowledge in the art, the above preferred conditions may be combined arbitrarily to obtain preferred examples of the disclosure.

The reagents and raw materials used in the disclosure are all commercially available.

The positive progress effect of the disclosure is:
The positive electrode material of the disclosure is used in the electrochemical device, and compared with the solution that only uses the same first active material, the improvement percentage of the 45 °C cycle capacity retention rate thereof is 1.1% or more, and has a higher high-temperature cycle capacity retention rate to improve the cycle performance of the overall battery cell.

### BRIEF DESCRIPTION OF THE DRAWINGS

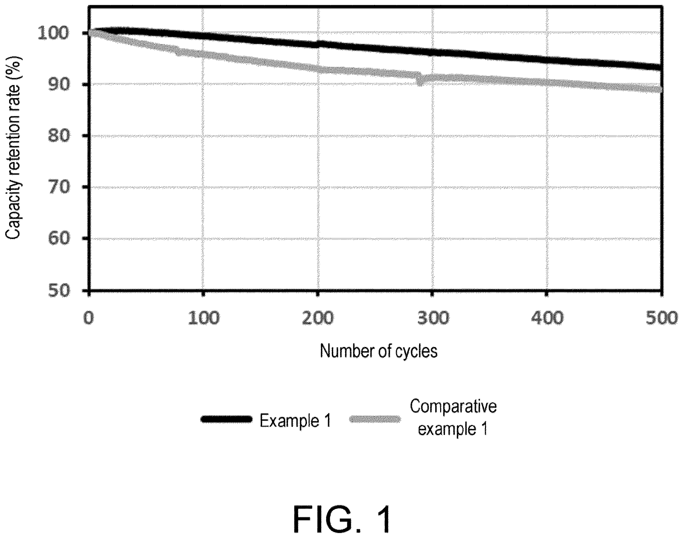

FIG. 1 is a graph of the 500-cycle cycle capacity retention rate of Example 1 and Comparative example 1.

### DESCRIPTION OF THE EMBODIMENTS

The disclosure will be further described in the following paragraphs together with the examples, but the disclosure is not limited to the scope of the examples. For the experimental methods that do not specify specific conditions in the following examples, selection is made according to conventional methods and conditions or according to the product instructions.

### Positive electrode material

**The positive electrode material of the first aspect of the disclosure** includes a first active material and a second active material, the first active material includes lithium transition metal oxide; the general chemical formula of the second active material is Li_{1+(a/(2+a))}Mn_{2a/(2+a)}M_{6/(2+a)-2}O₂; wherein 0.5≤a≤1, M is selected from one or a plurality of Ni, Co, Mn, Mg, Al, Ti, Zr, Nb, La, Sr, and W;
wherein the second active material produces a MnO₂ coating layer when having a lithium potential higher than X volt(V), wherein 4.3≤X≤4.6.

In the disclosure, the lithium potential is the potential of the working electrode obtained by taking lithium metal as the reference electrode and testing the lithium metal as the reference electrode.

Preferably, the first active material includes one or a plurality of lithium iron phosphate (LFP), lithium manganese iron phosphate (LMFP), nickel cobalt manganese ternary material (NCM), lithium cobalt oxide (LCO), lithium-rich manganese-based oxide (LRMO), lithium nickel manganate (LiNi_{0.5}Mn_{1.5}O₄).

In some specific embodiments, the first active material may be one or a plurality of LiNi_{0.9}Co_{0.06}Mn_{0.04}O₂, LiCoO₂, LiNi_{1.5}Mn_{0.5}O₄, LiMn_{0.6}Fe_{0.4}PO₄, LiFePO₄, and Li_{1.1}Ni_{0.4}Mn_{0.6}O₂.

In some specific embodiments, the first active material includes lithium iron phosphate and/or lithium manganese iron phosphate, and the lithium iron phosphate and/or lithium manganese iron phosphate also includes a carbon coating layer, such as LiMn_{0.6}Fe_{0.4}PO₄@0.02C and/or LiFePO₄@0.013C.

In the disclosure, the high-temperature cycle performance of the first active material is improved by introducing the second active material.

Preferably, the general formula of the second active material may be Li_{1+(a/(2+a))}Mn_{2a/(2+a)-A}M_{6/(2+a)-2}O_{2-2A}@AMnO₂; wherein 0≤A≤0.05, 0.5≤a≤1.

In some specific embodiments, the second active material may be one or a plurality of Li_{1.09}Mn_{0.5}Ni_{0.5}O₂, Li_{1.27}Mn_{0.55}Ni_{0.19}O₂, Li_{1.23}Mn_{0.46}Ni_{0.31}O₂, and Li_{1.2}Mn_{0.4}Ni_{0.4}O₂.

Preferably, the mass percentage of the second active material is 1% to 30%; more preferably 5% to 15%, and the percentage is a percentage of a mass of the second active material in a total mass of the first active material and the second active material. If the mass percentage of the second active material is too high, the cycle performance of the positive electrode sheet is deteriorated; if the mass percentage is too low, the effect of improving the cycle performance is not significant.

In some specific embodiments, the mass percentage of the second active material is 0.9%, 1%, 5%, 10%, 15%, 30%, or 31%, and the percentage is a percentage of the mass of the second active material in the total mass of the first active material and the second active material.

Preferably, the coating amount of the MnO₂ coating layer is 5% to 30%, more preferably 10% to 20%; and percentage in the coating amount is a percentage of a mass of MnO₂ in a mass of the second active material. The second active material has the MnO₂ coating layer to improve the stability thereof during the cycle, reduce the interface side reactions thereof, and improve the cycle performance of the battery core.

Preferably, the MnO₂ is in an amorphous form; the amorphous MnO₂ may inhibit the dissolution of noble metals in the second active material and improve the cycle stability of the positive electrode material.

Preferably, a primary particle size of the second active material is 40 nm to 600 nm; more preferably 100 nm to 200 nm; within the particle size range of the disclosure, the capacity performance and the cycle performance of the second active material are better. The primary particle size is a common understanding in the art, and generally refers to the particle size of a single fine crystal grain, also called the original particle size.

In some preferred embodiments, the first active material is LiFePO₄, the second active material is Li_{1.09}Mn_{0.5}Ni_{0.5}O₂, and the coating amount of the MnO₂ coating layer is 10 % to 20%.

In some other preferred embodiments, the first active material is Li_{1.1}Ni_{0.4}Mn_{0.6}O₂, the second active material is Li_{1.09}Mn_{0.5}Ni_{0.5}O₂, and the coating amount of the MnO₂ coating layer is 10 % to 20%.

In some specific embodiments, the positive electrode material also includes a third active material, the general formula of the third active material is Li₆₋ₓM_{1-y}N_{y}O_{4-z}; wherein 0≤x≤5.95, 0≤y≤1, 0≤z≤2, M includes one or a plurality of Fe, Ni, Co, and Cu, and N includes one or a plurality of Al, Mn, Ti, and Si.

In particular, the third active material is preferably one or a plurality of Li₅FeO₄, Li₆CoO₄, Li₂NiO₂, and Li₂Ni_{0.5}Cu_{0.5}O₂.

Preferably, the mass percentage of the total mass of the second active material and the third active material is 1% to 30%, the percentage is a percentage of the total mass of the second active material and the third active material to the total mass of the first active material, the second active material, and the third active material, and the mass ratio of the second active material and the third active material is (2 to 20):1.

In some specific embodiments, the mass ratio of the second active material and the third active material is 4:1, 9:1, or 7:3.

In some specific embodiments, the mass ratio of the first active material, the second active material, and the third active material is 90:8:2, 90:9:1, or 90:7:3.

### Positive electrode sheet

**The positive electrode sheet provided in the second aspect of the disclosure** includes the positive electrode material.

The positive electrode sheet includes a positive electrode current collector and a positive electrode active material layer formed on the positive electrode current collector. The positive electrode active material layer includes a positive electrode material, a conductive agent, and a binder.

In particular, the positive electrode current collector is not particularly limited as long as the positive electrode current collector does not cause chemical changes in the battery and has conductivity. For example, the positive electrode current collector may adopt, but not limited to: stainless steel, aluminum, nickel, titanium, calcined carbon; or aluminum or stainless steel having surface treated with carbon, nickel, titanium, silver, etc.

The positive electrode material is as described above and not described in detail here.

In particular, the conductive agent may be selected according to actual needs, as long as the conductive agent has conductivity and does not cause chemical changes in the battery. For example, the following may specifically be used: graphite, such as natural graphite or artificial graphite; carbon-based material such as carbon black, acetylene black, Ketjen black, channel black, furnace black, lamp black, thermal black and carbon fiber; metal powder or metal fiber such as copper, nickel, aluminum, and silver; conductive whisker, such as zinc oxide whisker and potassium titanate whisker; conductive metal oxide such as titanium dioxide; or conductive polymer, such as polyphenylene derivative, etc. Any one thereof or a mixture of two or more thereof may be used.

In particular, the binder plays a role in improving the adhesion between the positive electrode active material particles and the adhesion between the positive electrode active material and the positive electrode current collector. The type thereof is not particularly limited, and specific examples of the binder may include polyvinylidene fluoride (PVDF), polyvinylidene fluoride hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, ethylene propylene diene monomer (EPDM), sulfonated EPDM, styrene butadiene rubber (SBR), fluororubber, or various copolymers thereof, and any one thereof or a mixture of two or more thereof may be used.

In particular, the mass ratio of the conductive agent, the binder, and the positive electrode material is preferably (95 to 98):(0.5 to 3):(1 to 3); preferably 97:1.5:1.5.

### Electrochemical device

The third aspect of the disclosure provides an electrochemical device including the positive electrode sheet.

In the disclosure, the electrochemical device may be a battery, including a positive electrode sheet, a negative electrode sheet disposed opposite to the positive electrode sheet, a separator disposed between the positive electrode sheet and the negative electrode sheet, and an electrolyte, wherein the positive electrode sheet is as described above. Moreover, the battery may also optionally include a battery case for accommodating the positive electrode sheet, the negative electrode sheet, and the separator, and a sealing member for sealing the battery case.

In the battery, the negative electrode sheet includes a negative electrode current collector and a negative electrode active material layer formed on the negative electrode current collector. The negative electrode active material layer includes a negative electrode active material and optional conductive agent and binder.

In particular, as the negative electrode active material, a compound capable of reversibly absorbing and extracting lithium may be used. Specific examples of the negative active material may include: carbonaceous material such as artificial graphite, natural graphite, graphitized carbon fiber, amorphous carbon, etc.; (semi)metallic material capable of alloying with lithium, such as Si, Al, Sn, Pb, Zn, Bi, In, Mg, Ga, Cd, Si alloy, Sn alloy, Al alloy, etc.; metal oxide that may be doped and undoped with lithium, such as SiO*_{β}* (0<*β*<2), SnO₂, vanadium oxide, or lithium vanadium oxide; and composite material including (semi)metal-like material and carbonaceous material such as Si-C composite material or Sn-C composite material, which may be used alone or in combination of two or more thereof.

In particular, the conductive agent is a reagent used to ensure that the electrode has good charge and discharge performance. Selection may be made from a graphite material such as natural graphite, artificial graphite, carbon black material such as carbon black, acetylene black, ketjen black, channel black, furnace black, lamp black, thermal black, conductive fiber such as carbon fiber and metal fiber, non-metal powder such as carbon fluoride powder, metal powder such as aluminum powder, nickel powder, conductive whisker such as zinc oxide and potassium titanate, and conductive metal oxide such as titanium dioxide or polyphenylene derivative.

In particular, the binder is a component facilitating the combination between the active material and the conductive agent and the combination of the active material and the current collector. Usually, selection may be made from polyvinylidene fluoride, polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylene-propylene-diene terpolymer (EPDM), sulfonated EPDM, styrene-butadiene rubber, fluororubber, and various copolymers.

In particular, the negative electrode current collector serves as the base material to support the electrode active material, which is usually a metal foil having a thickness of 3 microns to 500 microns. There is no particular restriction on the material, as long as the material has high conductivity and does not produce chemical reactions in the secondary battery system. For example, the material may be a foil material obtained by surface-treating nickel, titanium, aluminum, silver, stainless steel, carbon, or the like. The negative electrode current collector usually has a smooth surface, but fine lines and the like may also be formed on the surface thereof to improve the adhesion between the positive electrode active material and the current collector. In addition to the foil material, the negative electrode current collector may also be used in any one or combination of various forms such as film, mesh, porous, foam, or non-woven fabric.

In the disclosure, the separator is an insulating film having high ion permeability and high mechanical strength disposed between the positive electrode sheet and the negative electrode sheet, and having chemical resistance and hydrophobicity. For the separator, the typical thickness is 9 µm to 18 µm; the pore diameter is 5 µm to 300 µm; the air permeability is 180 s/100 mL to 380 s/100 mL; and the porosity is 30% to 50%. As the separator, a sheet or nonwoven fabric made of an olefin polymer such as polypropylene; glass fiber or polyethylene may be used.

In the present disclosure, the electrolyte solution usually includes a non-aqueous solvent, lithium salt, and additive.

In particular, the non-aqueous solvent may be a conventional non-aqueous solvent in the art, preferably an ester solvent, and more preferably a carbonate solvent. In particular, the carbonate solvent is preferably one or a plurality of ethylene carbonate, dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethyl methyl carbonate (EMC), ethylene carbonate (EC), propylene carbonate (PC), and butylene carbonate (BC).

In particular, examples of the lithium salt may include at least one of LiPF₆, LiBF₄, LiN(SO₂F)₂ (abbreviated as LiFSI), LiClO₄, LiAsF₆, LiB(C₂O₄)₂ (abbreviated as LiBOB), LiBF₂(C₂O₄) (abbreviated as LiDFOB), LiN(SO₂RF)₂, LiN(SO₂F)(SO₂RF). Preferably the content thereof in the electrolyte solution is 5 % to 20%.

In particular, the additive is preferably one or a plurality of vinylene carbonate (VC), fluoroethylene carbonate (FEC), vinyl ethylene carbonate (VEC), ethylene sulfate (DTD), vinylene sulfate, 1,3-propane sultone (PS), 1-propene 1,3-sultone, and 1,4-butane sultone. The conventional usage amount of the additive in the electrolyte solution is 1 % to 4% of the electrolyte solution, for example 2%.

The disclosure has no particular limitation on the shape of the battery, which may be cylindrical, square, or any other shape.

### Electronic apparatus

The electronic apparatus in the disclosure includes the electrochemical device of the third aspect.

Illustratively, the electronic apparatus of the disclosure may be, but is not limited to, a mobile apparatus (e.g., mobile phone, tablet computer, notebook computer, video recorder, portable printer/copier, etc.), an electric vehicle (e.g., pure electric vehicle, hybrid electric vehicle, plug-in hybrid electric vehicle, electric bicycle, electric scooter, electric golf cart, electric truck, etc.), an electric locomotive, a ship, and a satellite, an energy storage system, and a backup power source, and the like.

On the basis of conforming to common knowledge in the art, the above preferred conditions may be combined arbitrarily to obtain preferred examples of the disclosure.

### Example 1

The present embodiment provides a positive electrode sheet having a cathode material containing 85% LiMn_{0.6}Fe_{0.4}PO₄@0.02C and 15% Li_{1.09}Mn_{0.5}Ni_{0.5}O₂. At the same time, the positive electrode sheet contains conductive carbon black (Super P), and the mass ratio of polyvinylidene fluoride (PVDF) and positive electrode material is 1.5:1.5:97.
(1) The preparation method of the positive electrode sheet includes the following steps
   First, the positive electrode sheet, Super P, and PVDF were mixed in the above ratio, and then nitrogen methyl pyrrolidone (NMP) was gradually added with high-speed stirring to prepare a positive electrode slurry with a certain viscosity. Then, the prepared slurry was evenly coated on the aluminum foil, and dried in a blast drying oven at 120 °C for 10 minutes. Lastly, the dried electrode sheet was rolled and cut to make a positive electrode sheet.
(2) Preparation of electrolyte solution:
   The organic solvent was a mixture of ethylene carbonate (EC), ethyl methyl carbonate (EMC), dimethyl carbonate (DMC), and polycarbonate (PC), wherein the volume ratio of EC, EMC, DMC, and PC was 30:35:30:5. In an argon atmosphere glove box with a water content smaller than 10 ppm, sufficiently dried lithium salt (LiPF₆) was dissolved in the organic solvent, and the electrolyte solution was obtained after mixing evenly, wherein the concentration of LiPF₆ was 1 mol/L.
(3) Preparation of separator: a 12 µm thick polypropylene separator was used.
(4) Preparation of negative electrode sheet:
   The negative active material graphite, conductive agent acetylene black, thickener sodium carboxymethylcellulose, and adhesive styrene-butadiene rubber were mixed in a mass ratio of 97:1:1:1. After deionized water was added, a negative electrode slurry was obtained under the action of a vacuum mixer; the negative electrode slurry was applied evenly on an 8 µm copper foil current collector; after drying at room temperature, the copper foil current collector was transferred to an oven for drying, and then cold pressed and cut to obtain the negative electrode sheet.
(5) Preparation of battery:
   The positive electrode sheet, the separator, and the negative electrode sheet prepared above were laminated in sequence, so that the separator was located between the positive and negative electrode sheets to play the role of isolation. Then the product was wrapped with aluminum plastic film, transferred to a vacuum oven to dry at 120 °C, and 3.0 g/Ah electrolyte solution was injected and then the opening was sealed. After processes such as leaving aside, hot and cold pressing, 4.5 V formation, fixture, grading separation, a soft pack battery having a capacity of 1 Ah (that is, a lithium-ion battery) was lastly prepared.

The method of preparing the positive electrode sheets in other Examples and Comparative examples was the same as those in Example 1; wherein the preparation parameter settings in Examples 2 to 23 and Comparative examples 1 to 8 are shown in Table 1; the preparation parameter settings of the positive electrode sheets in Examples 24 to 27 are shown in Table 2.

### Effect example

Capacity retention rate test method: within the desired voltage range, the maximum value of the voltage range was the charge voltage of the lithium-ion battery, and the minimum value thereof was the discharge voltage. At 45 °C, charge and discharge was performed at 1C/1C, and the ratio of the discharge capacity at the 500th cycle and the 1st cycle was the capacity retention rate.

**Table 1**

| | First active material | Second active material | | | Test voltage | 45 °C cycle capacity retention rate |
|---|---|---|---|---|---|---|
| | | Substance | Mass percentag e | Primary particle size (nm) | | |
| Example 1 | LiMn_{0.6}Fe_{0.4}PO₄@ 0.02C | Li_{1.09}Mn_{0.5}Ni_{0.5}O₂ | 10% | 100 | 2.5 V to 4.2 V | 93.1% |
| Example 2 | LiFePO₄@0.013C | Li_{1.09}Mn_{0.5}Ni_{0.5}O₂ | 10% | 100 | 2.5 V to 3.65 V | 94.3% |
| Example 3 | LiNi_{0.9}Co_{0.06}Mn_{0.04} O₂ | Li_{1.09}Mn_{0.5}Ni_{0.5}O₂ | 10% | 100 | 2.8 V to 4.2 V | 88.4% |
| Example 4 | LiCoO₂ | Li_{1.09}Mn_{0.5}Ni_{0.5}O₂ | 10% | 100 | 3.0 V to 4.45 V | 86.2% |
| Example 5 | LiNi_{1.5}Mn_{0.5}O₄ | Li_{1.09}Mn_{0.5}Ni_{0.5}O₂ | 10% | 100 | 3.0 V to 4.7 V | 81.9% |
| Example 6 | LiMn_{0.6}Fe_{0.4}PO₄ | Li_{1.09}Mn_{0.5}Ni_{0.5}O₂ | 10% | 100 | 2.5 V to 4.2 V | 92.8% |
| Example 7 | LiFePO₄ | Li_{1.09}Mn_{0.5}Ni_{0.5}O₂ | 10% | 100 | 2.5 V to 3.65 V | 94.3% |
| Example 8 | Li_{1.1}Ni_{0.4}Mn_{0.6}O₂ | Li_{1.09}Mn_{0.5}Ni_{0.5}O₂ | 10% | 100 | 3.0 V to 4.7 V | 93.4% |
| Example 9 | LiMn_{0.6}Fe_{0.4}PO₄@ 0.02C | Li_{1.09}Mn_{0.5}Ni_{0.5}O₂ | 5% | 100 | 2.5 V to 4.2 V | 92.4% |
| Example 10 | LiMn_{0.6}Fe_{0.4}PO₄@ 0.02C | Li_{1.09}Mn_{0.5}Ni_{0.5}O₂ | 15% | 100 | 2.5 V to 4.2 V | 93.0% |
| Example 11 | LiMn_{0.6}Fe_{0.4}PO₄@ 0.02C | Li_{1.09}Mn_{0.5}Ni_{0.5}O₂ | 1% | 100 | 2.5 V to 4.2 V | 91.9% |
| Example 12 | LiMn_{0.6}Fe_{0.4}PO₄@ 0.02C | Li_{1.09}Mn_{0.5}Ni_{0.5}O₂ | 30% | 100 | 2.5 V to 4.2 V | 90.8% |
| Example 13 | LiMn_{0.6}Fe_{0.4}PO₄@ 0.02C | Li_{1.09}Mn_{0.5}Ni_{0.5}O₂ | 0.9% | 100 | 2.5 V to 4.2 V | 90.8% |
| Example 14 | LiMn_{0.6}Fe_{0.4}PO₄@ 0.02C | Li_{1.09}Mn_{0.5}Ni_{0.5}O₂ | 31% | 100 | 2.5 V to 4.2 V | 89.9% |
| Example 15 | LiMn_{0.6}Fe_{0.4}PO₄@ 0.02C | Li_{1.09}Mn_{0.5}Ni_{0.5}O₂ | 10% | 150 | 2.5 V to 4.2 V | 92.7% |
| Example 16 | LiMn_{0.6}Fe_{0.4}PO₄@ 0.02C | Li_{1.09}Mn_{0.5}Ni_{0.5}O₂ | 10% | 200 | 2.5 V to 4.2 V | 92.5% |
| Example 17 | LiMn_{0.6}Fe_{0.4}PO₄@ 0.02C | Li_{1.09}Mn_{0.5}Ni_{0.5}O₂ | 10% | 50 | 2.5 V to 4.2 V | 92.3% |
| Example 18 | LiMn_{0.6}Fe_{0.4}PO₄@ 0.02C | Li_{1.09}Mn_{0.5}Ni_{0.5}O₂ | 10% | 300 | 2.5 V to 4.2 V | 92.3% |
| Example 19 | LiMn_{0.6}Fe_{0.4}PO₄@ 0.02C | Li_{1.09}Mn_{0.5}Ni_{0.5}O₂ | 10% | 40 | 2.5 V to 4.2 V | 92.0% |
| Example 20 | LiMn_{0.6}Fe_{0.4}PO₄@ 0.02C | Li_{1.09}Mn_{0.5}Ni_{0.5}O₂ | 10% | 600 | 2.5 V to 4.2 V | 91.8% |
| Example 21 | LiMn_{0.6}Fe_{0.4}PO₄@ 0.02C | Li_{1.27}Mn_{0.55}Ni_{0.19}O₂ | 10% | 100 | 2.5 V to 4.2 V | 92.3% |
| Example 22 | LiMn_{0.6}Fe_{0.4}PO₄@ 0.02C | Li_{1.23}Mn_{0.46}Ni_{0.31}O₂ | 10% | 100 | 2.5 V to 4.2 V | 92.0% |
| Example 23 | LiMn_{0.6}Fe_{0.4}PO₄@ 0.02C | Li_{1.2}Mn_{0.4}Ni_{0.4}O₂ | 10% | 100 | 2.5 V to 4.2 V | 91.6% |
| Comparative example 1 | LiNi_{0.9}Co_{0.06}Mn_{0.04} O₂ | \ | \ | \ | 2.8 V to 4.2 V | 86.5% |
| Comparative example 2 | LiCoO₂ | \ | \ | \ | 3.0 V to 4.45 V | 84.8% |
| Comparative example 3 | LiNi_{1.5}Mn_{0.5}O₄ | \ | \ | \ | 3.0 V to 4.7 V | 78.8% |
| Comparative example 4 | LiMn_{0.6}Fe_{0.4}PO₄@ 0.02C | \ | \ | \ | 2.5 V to 4.2 V | 89.0% |
| Comparative example 5 | LiFePO₄@0.013C | \ | \ | \ | 2.5 V to 3.65 V | 93.3% |
| Comparative example 6 | Li_{1.1}Ni_{0.4}Mn_{0.6}O₂ | \ | \ | \ | 3.0 V to 4.7 V | 91.4% |
| Comparative example 7 | \ | Li₂MnO₃ | | \ | 2.5 V to 4.2 V | 33.5% |
| Comparative example 8 | \ | Li₂MnO₃@MnO₂ | 100% | 100 | 2.5 V to 4.2 V | 75.2% |

| | | | | | | |
|---|---|---|---|---|---|---|
| In particular, "\" means not added. | | | | | | |

It may be seen from the data in Table 1 that compared with the solution using only the same first active material, the technical solution of the disclosure had a significantly higher percentage increase in the 45 °C cycle capacity retention rate thereof.

Comparing Example 3 with Comparative example 1, it may be seen that when the first active material was LiNi_{0.9}Co_{0.06}Mn_{0.04}O₂, when the second active material was not added, as shown in FIG. 1, the capacity retention rate of the battery after 500 cycles at 45 °C was only 86.5%, but with the second active material, the 45 °C cycle capacity retention rate of the battery was increased to 88.4%.

Comparing Example 4 with Comparative example 2, it may be seen that when the first active material was LiCoO₂, the 45 °C cycle capacity retention rate of the battery without adding the second active material was only 84.8%, but with the second active material, the 45 °C cycle capacity retention rate of the battery was increased to 86.2%.

Comparing Example 5 with Comparative example 3, it may be seen that when the first active material was LiNi_{1.5}Mn_{0.5}O₄, the 45 °C cycle capacity retention rate of the battery without adding the second active material was only 78.8%, but with the second active material, the 45 °C cycle capacity retention rate of the battery was increased to 81.9%. The effect of Example 5 was significantly improved.

When the first active material was LiMn_{0.6}Fe_{0.4}PO₄, combined with a specific second active material and other conditions, the 45 °C cycle capacity retention rate of the battery was always 89.9% or more. Compared with Comparative example 4, the high-temperature capacity retention rate was improved to a certain extent; comparison between Example 1 and Example 6 shows that when LiMn_{0.6}Fe_{0.4}PO₄ was carbon-coated, the high-temperature capacity retention rate of the battery may be more significantly improved. The 500-cycle capacity retention rate of Example 1 is as shown in FIG. 1, which may reach 93.1%. This is because when LiMn_{0.6}Fe_{0.4}PO₄ was not coated with carbon, the surface thereof was exposed to the electrolyte solution and was prone to side reactions with the electrolyte solution, consuming active lithium and causing cycle attenuation. Therefore, carbon coating may achieve better cycle stability.

Comparing Example 7 with Comparative example 5, it may be seen that when the first active material was LiFePO₄, the 45 °C cycle capacity retention rate of the battery without adding the second active material was only 93.3%, but with the second active material, the 45 °C cycle capacity retention rate of the battery was increased to 94.3%.

Comparing Example 8 with Comparative example 6, it may be seen that when the first active material was Li_{1.1}Ni_{0.4}Mn_{0.6}O₂, the 45 °C cycle capacity retention rate of the battery without adding the second active material was only 86.5%, but with the second active material, the 45 °C cycle capacity retention rate of the battery was increased to 93.4%. The effect of Example 8 was significantly improved.

Compared with the solution using only the same first active material, the technical solution of the disclosure had an improvement percentage of 45 °C cycle capacity retention rate as shown in Table 2. The calculation formula for the improvement percentage is: improvement percentage=(capacity retention rate of Example-capacity retention rate of Comparative example)/capacity retention rate of Comparative example.

**Table 2**

| Example | 45 °C cycle capacity retention rate | Comparative example | 45 °C cycle capacity retention rate | Improvement percentage |
|---|---|---|---|---|
| Example 1 | 93.1% | Comparative example 4 | 89.0% | 4.6% |
| Example 2 | 94.3% | Comparative example 5 | 93.3% | 1.1% |
| Example 3 | 88.4% | Comparative example 1 | 86.5% | 2.2% |
| Example 4 | 86.2% | Comparative example 2 | 84.8% | 1.7% |
| Example 5 | 81.9% | Comparative example 3 | 78.8% | 3.9% |
| Example 8 | 93.4% | Comparative example 6 | 86.5% | 8.0% |

It may be seen from the data in Table 2 that compared with the solution using only the same first active material, the 45 °C cycle capacity retention rate of the technical solution of the disclosure was increased by 1.1% or more, and may be increased by 8% in some preferred implementations. It may be that certain structures (such as the irreversible phase Li₂MnO₃) present in the second active material cause the second active material to be activated during a long cycle, so that the activation phenomenon of slowly releasing lithium exists at a lower potential smaller than 4.3 V to 4.4 V, thereby improving the cycle stability of the battery.

It may be seen from Example 9 to Example 14 that the mass percentage of the second active material had a certain impact on the high-temperature cycle stability of the battery. Within a certain range, as the second active material was increased, the capacity retention rate of the battery was increased. When the mass percentage of the second active material was 15%, the capacity retention rate may be 93%. The second active material played the role of lithium supplementation and making up for the thermodynamic loss during the cycle. However, the introduction of the second active material lead to an increase in the impedance of the positive electrode, thus increasing the polarization during the cycle, resulting in a kinetic loss during the cycle. Therefore, when the proportion of the second active material was within a certain range, the cycle performance may be improved.

It may be seen from Examples 16 to 20 that the primary particle size of the second active material also affected the high-temperature capacity retention rate of the battery. When the particle size was within an appropriate range, the capacity retention rate of the battery may be improved. If the primary particle size of the second active material was too large, the impedance of the second active material was large, the electrochemical activity thereof was weak, and the lithium supplementation effect thereof was poor. If the primary particle size was too small, the electrochemical activity of the second active material was too strong. Although the lithium supplementation effect was good, there was a larger kinetic loss during the cycle. Therefore, when the primary particle diameter of the second active material was within a certain range, the cycle performance may be improved.

In Examples 24 to 27, the positive electrode material also included a third active material, and the parameter settings and the effects of cycle capacity retention rate thereof are shown in Table 3:

**Table 3**

| | First active material | Second active material | Third active material | Mass ratio | Test voltage | 45 °C cycle capacity retention rate |
|---|---|---|---|---|---|---|
| Example 3 | LiMn_{0.6}Fe_{0.4} PO₄ | Li_{1.33}Mn_{0.67} O₂ | \ | 90:10: 0 | 2.8 V to 4.2 V | 92.8% |
| Example 24 | LiMn_{0.6}Fe_{0.4} PO₄ | Li_{1.33}Mn_{0.67} O₂ | Li₅FeO₄ | 90:8:2 | 2.8 V to 4.2 V | 93.0% |
| Example 25 | LiMn_{0.6}Fe_{0.4} PO₄ | Li_{1.33}Mn_{0.67} O₂ | Li₆CoO₄ | 90:9:1 | 2.8 V to 4.2 V | 92.9% |
| Example 26 | LiMn_{0.6}Fe_{0.4} PO₄ | Li_{1.33}Mn_{0.67} O₂ | Li₂NiO₂ | 90:7:3 | 2.8 V to 4.2 V | 93.0% |
| Example 27 | LiMn_{0.6}Fe_{0.4} PO₄ | Li_{1.33}Mn_{0.67} O₂ | Li₂Ni_{0.5}Cu_{0.5} O₂ | 90:7:3 | 2.8 V to 4.2 V | 92.9% |

It may be seen from the data of Table 3 that when the positive electrode material also included the third active material, the 45 °C cycle capacity retention rate was increased to a certain extent.

The above descriptions are only specific embodiments of the disclosure. However, the disclosure is not limited to the specific details of the above embodiments. Within the scope of the technical concept of the disclosure, a variety of simple modifications may be made to the technical solution of the disclosure, and these simple modifications all belong to the scope of the disclosure.

In addition, it should be noted that the specific technical features described in the specific embodiments may be combined in any suitable manner as long as there is no contradiction. In order to avoid unnecessary repetition, various possible combinations are not further described in the disclosure.

## Claims

1. A positive electrode material, comprising a first active material and a second active material;
wherein the first active material comprises a lithium transition metal oxide;
wherein a general chemical formula of the second active material is Li_{1+(a/(2+a))}Mn_{2a/(2+a)}M_{6/(2+a)-2}O₂; wherein 0.5≤a≤1, M is selected from one or a plurality of Ni, Co, Mn, Mg, Al, Ti, Zr, Nb, La, Sr, and W;
the second active material produces a MnO₂ coating layer when having a lithium potential higher than X volt(V), wherein 4.3≤X≤4.6.

2. The positive electrode material of claim 1, wherein the positive electrode material satisfies one or a plurality of conditions (a) to (b) below:
(a) the lithium transition metal oxide comprises one or a plurality of lithium iron phosphate, lithium manganese iron phosphate, lithium nickel cobalt manganese oxide, lithium cobalt oxide, lithium-rich manganese-based material, and lithium manganese nickel oxide;
(b) the general formula of the second active material is Li_{1+(a/(2+a))}Mn_{2a/(2+a)-A}M_{6/(2+a)-2}O_{2-2A@}AMnO₂; wherein 0≤A≤0.05, 0.5≤a≤1.

3. The positive electrode material of claim 1, wherein the lithium transition metal oxide comprises a carbon coating layer.

4. The positive electrode material of claim 1, wherein the positive electrode material satisfies one or a plurality of conditions (c) to (e) below:
(c) a mass percentage of the second active material is 1% to 30%, and the mass percentage is a percentage of a mass of the second active material in a total mass of the first active material and the second active material;
(d) a coating amount of the MnO₂ coating layer is 5% to 30%, and a percentage in the coating amount is a percentage of a mass of the MnO₂ in the mass of the second active material;
(e) the MnO₂ is in an amorphous state.

5. The positive electrode material of claim 1, wherein the positive electrode material comprises a third active material, and a general chemical formula of the third active material is Li₆₋ₓM_{1-y}N_{y}O_{4-z}; wherein 0≤x≤5.95, 0≤y≤1, 0≤z≤2, M is selected from one or a plurality of Fe, Ni, Co, and Cu, and N is selected from one or a plurality of Al, Mn, Ti, and Si.

6. The positive electrode material of claim 5, wherein a mass percentage of a total mass of the second active material and the third active material is 1% to 30%, the mass percentage is a percentage of a total mass of the second active material and the third active material to a total mass of the first active material, the second active material, and the third active material; a mass ratio of the second active material and the third active material is (2 to 20): 1.

7. The positive electrode material of claim 1, wherein a primary particle diameter of the second active material is 40 nm to 600 nm.

8. An electrochemical device, comprising a positive electrode sheet, a negative electrode sheet, and a separator, and the positive electrode sheet contains the positive electrode material of any of claims 1 to 7.

9. An electronic device, comprising the electrochemical device of claim 8.
